# EUROPÄISCHE PATENTANMELDUNG

(11) **EP 3 219 414 A1**
(43) Veröffentlichungstag der Anmeldung: **20.09.2017**
(21) Anmeldenummer: 16000642.5
(22) Anmeldetag: 16.03.2016
(51) Int. Cl.: B22F 3/105

(54) **VERFAHREN UND VORRICHTUNG ZUM GENERATIVEN FERTIGEN EINES DREIDIMENSIONALEN BAUTEILS**

(71) Anmelder: Linde Aktiengesellschaft, 80331 München (DE)
(72) Erfinder: Scholz, Jürgen, 81379 München (DE); Miklos, Ernst, 85551 Kirchheim (DE); Fieret, Jim, Bell Hill, Hook Norton OX15 5PS (GB); Foret, Pierre, 80796 München (DE)
(74) Vertreter: Gellner, Bernd

(57) **Zusammenfassung**

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials,
- Zuführen eines Prozessgases zum Ausgangsmaterial,
- Schmelzen des Ausgangsmaterials mit einer Wärmequelle.

Das Verfahren zeichnet sich dadurch aus, dass das Prozessgas einen Anteil an einem chemisch reduzierend wirkenden Agens aufweist.

## Beschreibung

Die vorliegende Erfindung betrifft ein Verfahren und eine Vorrichtung zum generativen Fertigen eines dreidimensionalen Bauteils.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM), als Laser Metal Fusion (LMF) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen und erstarrt anschließend in der gewünschten Kontur. Die dafür erforderliche Energie wird durch einen Elektronenstrahl eingebracht. Das Verfahren erfolgt meistens in einer Inertgas gefluteten Unterdruck-Kammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma/Lichtbogen aufgeschmolzen und anschließend verfestigt werden. Weiterhin werden bei den generativen Fertigungsverfahren Inert- oder Aktivgase als Prozessgase verwendet.

Bei Verwendung einer Inertgasatmosphäre verbleibt die Zusammensetzung des aufgebrachten Ausgangsmaterials im Wesentlichen unverändert, nachdem sie mittels einer Wärmequelle aufgeschmolzen wurden. Durch die Aufschmelzung, Erstarrung und Wärmeeinflusszonen werden die metallurgischen Eigenschaften gegenüber dem ursprünglichen Material verändert.

Das Laser-Metall-Schmelzen (LMF) findet in einer Prozesskammer statt, die mit zumeist einem inerten Prozessgas gefüllt ist. Diese Prozessgasatmosphäre enthält oftmals bestimmte Anteile von Luft, wobei insbesondere der Sauerstoff einen schädlichen bzw. nachteiligen Effekt haben kann. Bei Laser-Schmelzvorrichtungen gibt es zahlreiche Lösungsversuche, um das Sauerstofflevel in der Prozessgas-Atmosphäre niedrig zu halten. Diese Maßnahmen sind wesentlich um eine Oxidation der Metallteilen und des Metallpulvers im Allgemeinen zu verhindern.

Problematisch dabei ist, dass diese Maßnahmen und Verfahren schwierig auszuführen sind oder sehr zeitintensiv sind, um das Sauerstofflevel auf ein zulässiges Level abzusenken. Insbesondere bei kurzen Prozesslaufzeiten, wenn die Kammer häufig geöffnet werden muss, nimmt es sehr viel Zeit in Anspruch, die Kammer zu reinigen bzw. auf ein bestimmtes Sauerstofflevel abzusenken.

Aufgabe der vorliegenden Erfindung ist es daher, ein Verfahren zum Laser-Metall-Schmelzen bereitzustellen, bei dem sich die Verunreinigungen in der Prozessgas-Atmosphäre, insbesondere das Sauerstoffniveau, schnell und einfach auf ein Level absenken lässt, das den Herstellungsprozess nicht negativ beeinflusst.

Diese Aufgabe wird durch di unabhängigen Ansprüche gelöst. Vorteilhafte Ausgestaltungen sind in den Unteransprüchen angegeben.

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials,
- Zuführen eines Prozessgases zum Ausgangsmaterial, und
- Schmelzen des Ausgangsmaterials mit einer Wärmequelle.
Das Verfahren zeichnet sich dadurch aus, dass das Prozessgas einen Anteil an einem chemisch reduzierend wirkenden Agens aufweist.

Erfindungsgemäß ist vorzugsweise vorgesehen als Prozessgas ein inertes Gas, wie z.B. Stickstoff, Helium oder Argon zu verwenden, das einen vorbestimmten Anteil an einem chemisch reduzierend wirkenden Agens aufweist.

Beispiele für Gase, die im Sinne der vorliegenden Erfindung als chemisch reduzierend wirkendes Agens angesehen werden sind bspw. Stickoxide (N₂O), Carbonmonoxid (CO) oder Wasserstoff.

Nachfolgend sind bevorzugte Werte für die Beimischung des bzw. der reduzierenden Komponenten bzw. des reduzierend wirkenden Agens zum inerten Gas angegeben:
- Wasserstoff (H₂) im Bereich zwischen 0,01 Gewichtsprozent (Gew.%) bis 20 Gew.%, besonders bevorzugt im Bereich zwischen 0,1 Gew.% bis 5 Gew.%;
- Kohlenmonoxid (CO) im Bereich zwischen 0,001 Gew.% bis 5 Gew.%, besonders bevorzugt im Bereich zwischen 0,001 Gew.% bis 1 Gew.%;
- Stickstoffmonoxid (NO) im Bereich zwischen 0,001Gew.% bis 0,1 Gew.%, besonders bevorzugt im Bereich zwischen 0,001 Gew.% bis 0,05 Gew.%;
- oder Mischungen daraus.

Bei Mischungen von mehreren reduzierenden Agens, z.B. H₂ mit CO darf die Summe nicht über 5 Gew.% auf Grund von Sicherheitsempfehlung für Wärmebehandlungsöfen liegen.

Das reduzierende Agens reagiert mit dem Sauerstoff in der Prozessgasatmosphäre. Die Reaktion findet in dem Bereich statt, in dem das Metall aufgrund des Einwirkens der Wärmequelle, bspw. eines Laserstrahls, im flüssigen Zustand vorliegt. Dies führt zur Bildung einer geringen Menge Wasserdampf und führt dazu, dass das Metall in relativ reiner Form und oxidfrei vorliegt.

Dieser Wasserstoff reagiert zudem mit dem vom Metallpulver absorbierten Sauerstoff. Der Wasserstoff stellt zudem sicher, dass während der Kühlphase, nachdem der Laser sich weiter bewegt hat, die Prozessgasatmosphäre von Sauerstoff gereinigt ist.

Auf diese Weise bleiben die Prozessparameter stabil und es sind homogene metallurgische Effekte während der Herstellung erzielbar.

Unter einem generativen Fertigen wird im Rahmen der vorliegenden Erfindung das Lagen bzw. schichtweise Aufbauen eines dreidimensionalen Bauteils unter Verwendung eines Pulverbettes, einer Pulverzuführung oder einer Drahtzuführung, welche als Ausgangsmaterial dienen, und mittels Laserstrahl, Elektronenstrahl oder Plasma bzw. Lichtbogen aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (LaserSintern (SLS)) Metall-Laser-Sintern (DMLS), Metall-Laser-Sintern (IMLS), Electron Beam Melting (EBM)) Bezug genommen.

Die Zudosierung des Agens kann von einer Steuereinrichtung gesteuert werden.

Durch Steuerung der Konzentration des reduzierenden Agens kann das Gleichgewicht zwischen der Sauerstoff-Metallreaktion und der Sauerstoff-Wasserstoffreaktion fein eingestellt werden. Auf diese Weise können die Eigenschaften des Werkstückes präzise an die Anforderungen angepasst werden.

Mittels des erfindungsgemäßen Verfahrens ist es zudem auf einfache Art und Weise möglich *bei* Vorrichtungen zum generativen Fertigen, wie z.B. bei LMF-Vorrichtungen, durch das Hinzufügen eines chemisch reduzierend wirkenden Agens den Sauerstoff unterhalb eines erlaubten Schwellenwerts zu halten. Durch das chemisch reduzierend wirkende Agens sind Verunreinigungen, wie z.B. Sauerstoff die im Prozessraum und/oder im Metallpulver vorliegen, auf einfache Art und Weise aus der Prozesskammer entfernbar.

Das Einbringen des reduzierend wirkenden Agens in das Prozessgas kann mittels einer Agenszuführeinrichtung erfolgen, die beispielsweise eine Mischkammer mit zwei separaten Einlässen zum Zuführen von Inertgas und dem reduzierenden Agens in die Mischkammer aufweist.

Alternativ kann das Gasgemisch bzw. das Prozessgas samt Agens auch bereits vorgemischt als Premix in einem entsprechenden Prozessgasvorratsbehälter bereitgestellt werden.

Das Zudosieren des Agens kann von einer Steuereinrichtung gesteuert werden. Diese Steuereinrichtung kann eine Agensreglereinrichtung mit einem geschlossenen Regelkreis umfassen, der die Zudosierung des Agens regelt. Die Agensreglereinrichtung erfasst mittels zumindest eines Sensors einen IstWert einer Konzentration des Agens im Prozessgas und/oder in der Prozessgasatmosphäre oder einen entsprechenden Volumenstroms des Agens oder des das Agens enthaltenden Prozessgases und vergleicht diesen mit einem vorgegebenen Sollwert, wobei über ein Stellglied der vorgegebene Sollwert eingestellt wird.

Somit kann die Konzentration des reduzierenden Gases im Prozessgas kontinuierlich überwacht werden, um gleichbleibende Prozessparameter sicherzustellen. Die Erfindung ist insbesondere dann vorteilhaft, wenn als Metall Edelstahl und als reduzierendes Agens Wasserstoff vorgesehen ist.

Durch Verwendung des erfindungsgemäßen Verfahrens wird die Oxidation des herzustellenden Bauteils reduziert, die Zeit zum Reinigen der Prozessgas-Atmosphäre deutlich vermindert. Zudem reduziert sich der Inertgasverbrauch.

Weiterhin ist erfindungsgemäß eine Vorrichtung zum generativen Fertigen von dreidimensionalen Bauteilen Vorgesehen. Diese Vorrichtung umfasst
- eine Prozesskammer,
- eine Plattform auf der ein metallisches Ausgangsmaterial bereitstellbar ist,
- eine Prozessgaszuführeinrichtung zum Zuführen eines Prozessgases,
- eine Wärmequelle zum Schmelzen des Ausgangsmaterials.
Die Vorrichtung zeichnet sich dadurch aus, dass eine Agenszuführeinrichtung vorgesehen ist, um dem Prozessgas einen Anteil an einem chemisch reduzierend wirkenden Agens zuzuführen oder die Agenszuführeinrichtung ein Gasvorratsbehälter ist, der Prozessgas und ein chemisch reduzierend wirkendendes Agens enthält.

Die Vorteile der erfindungsgemäßen Vorrichtung entsprechen im Wesentlichen den Vorteilen des erfindungsgemäßen Verfahrens.

Weiterhin kann die Agenszuführeinrichtung eine Mischkammer zum Beimischen des Agens zum Prozessgas vorgesehen sein, wobei aus der Mischkammer der Prozesskammer Prozessgas oder eine Mischung aus Prozessgas und Agens zuführbar ist. Demgemäß weist die Mischkammer einen ersten Einlass zum Zuführen eines Prozessgases und einen zweiten Einlass zum Zuführen eines Agens oder einen zweiten Einlass zum Zuführen eines ein Agens enthaltenden Prozessgases auf. Zudem weist die Mischkammer einen Auslass auf der mit der Prozesskammer verbunden ist. Eine solche externe Mischkammer ist vorteilhaft, da sich bestehend Anlagen bzw. Vorrichtungen damit derart erweitern lassen, dass eine Zudosierung eines chemisch reduzierend wirkenden Agens zum Prozessgas möglich ist.

Die Prozesskammer kann auch selbst zwei Einlässe aufweisen, wobei ein Einlass zum Zuführen von Prozessgas und der andere Einlass zum Zuführen eines Agens oder eines Agens enthaltenden Prozessgases (Premix) aus entsprechenden Vorratsbehältern vorgesehen ist.

Das Prozessgas und das Agens können somit auch als Premix aus einem Gasvorratsbehälter bereitgestellt werden, der sowohl Prozessgas als auch einen entsprechenden Anteil an Agens enthält. Dieser den Premix enthaltende Gasvorratsbehälter bildet dann die Agenszuführeinrichtung aus.

Die Agenszuführeinrichtung kann somit die Mischkammer, der Premix-Vorratsbehälter oder der Vorratsbehälter enthaltend das Agens sein.

Das Zudosieren des Agens kann von einer Steuereinrichtung gesteuert werden. Diese Steuereinrichtung kann eine Agensreglereinrichtung mit einem geschlossenen Regelkreis umfassen, die die Zudosierung des Agens regelt. Die Agensreglereinrichtung erfasst mittels zumindest eines Sensors einen Ist-Wert einer Konzentration des Agens im Prozessgas und/oder in der Prozessgasatmosphäre oder einen entsprechenden Volumenstroms des Agens oder des das Agens enthaltenden Prozessgases und vergleicht diesen mit einem vorgegebenen Sollwert, wobei über ein Stellglied der vorgegebene Sollwert eingestellt wird.

Unter Volumenstrom bzw. Ströme werden die Werte der entsprechenden Gasströme verstanden, die von der Agenszuführeinrichtung der Prozesskammer zugeführt werden.

Die Erfindung wird im Folgenden an Hand von zwei Figuren näher erläutert.
- Figur 1: eine schematische Darstellung einer erfindungsgemäßen Vorrichtung mit einer Agenszuführeinrichtung gemäß einem ersten Ausführungsbeispiel, und
- Figur 2: eine schematische Darstellung einer erfindungsgemäßen Vorrichtung mit einer Agenszuführeinrichtung gemäß einem zweiten Ausführungsbeispiel.

Im Folgenden wird eine Vorrichtung 1 zum generativen Fertigen und Kodieren eines dreidimensionalen Bauteils beschrieben. Grundsätzlich ist, wie bereits vorstehend erwähnt, nahezu jede Vorrichtung 1 zum generativen Fertigen von dreidimensionalen Bauteilen zum Ausführen des erfindungsgemäßen Verfahrens geeignet.

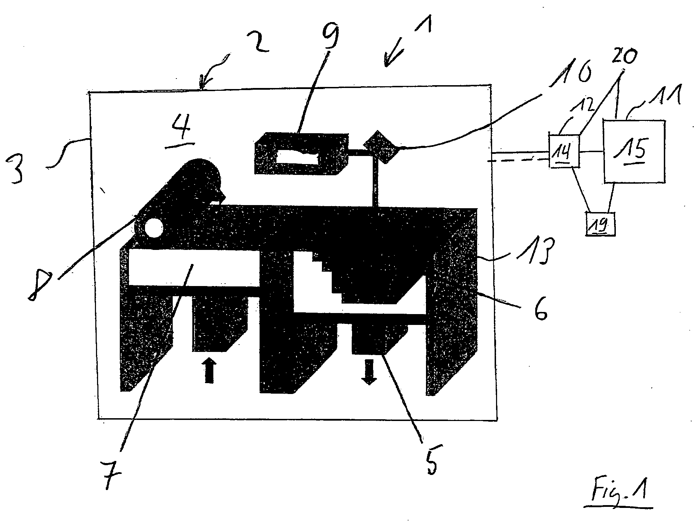

Die Erfindung wird in allgemeiner Form beispielhaft an Hand eine Laser-Schmelz-Vorrichtung 1 mit Pulverbett erläutert (Figur 1).

Die Laser-Schmelz-Vorrichtung umfasst eine Prozesskammer 2, die durch eine Kammerwandung 3 nach außen hin abgeschlossen ist und einen Prozessraum 4 begrenzt. Die Prozesskammer 2 dient als Bauraum für das dreidimensionale Bauteil.

In der Prozesskammer 2 ist ein nach oben offener Behälter 13 angeordnet. In dem Behälter 13 ist eine Bauplattform 5 zur Aufnahme des zu fertigenden Bauteils 6 angeordnet. Die Bauplattform 5 weist eine Höhenverstelleinrichtung auf, mittels der die Bauplattform 5 in vertikaler Richtung derart einstellbar ist, dass eine Oberfläche einer neu zu verfestigenden Schicht in einer Arbeitsebene angeordnet ist.

Weiterhin umfasst die Vorrichtung 1 einen Vorratsbehälter 7. Der Vorratsbehälter 7 ist zur Aufnahme eines verfestigbaren pulverförmigen Ausgangsmaterials ausgebildet.

Weiterhin ist eine Auftrageinrichtung 8 zum Aufbringen des Ausgangsmaterials auf die Bauplattform 5 vorgesehen. Eine solche Auftrageinrichtung 8 ist in horizontaler Richtung parallel zu der Arbeitsebene beweglich.

Zudem ist ein Laser 9 zum Erzeugen eines Laserstrahls bzw. eine Wärmequelle vorgesehen. Ein von dem Laser 9 erzeugter Laserstrahl wird über eine Umlenkeinrichtung 10 umgelenkt und durch eine Fokussiereinrichtung (nicht dargestellt) auf einen vorbestimmten Punkt unmittelbar unterhalb der Arbeitsebene fokussiert. Mittels der Umlenkeinrichtung 10 kann der Verlauf des Laserstrahls derart verändert werden, dass er die dem Querschnitt des herzustellenden Objekts entsprechenden Stellen der aufgetragenen Schicht aufschmilzt.

Zudem ist eine Prozessgaszuführeinrichtung 11 vorgesehen, mittels der die Prozesskammer 2 mit einem Prozessgas beaufschlagbar ist.

Die Prozessgaszuführeinrichtung 11 weist einen Vorratsbehälter 15 für das Prozessgas auf, wobei der Prozessgasvorratsbehälter 15 über einen Leitungsabschnitt mit der Prozesskammer 2 verbunden ist.

Erfindungsgemäß ist vorgesehen als Prozessgas ein inertes Gas, wie z.B. Stickstoff, Helium oder Argon zu verwenden.

Weiterhin ist eine Agenszuführeinrichtung 12 vorgesehen, mittels der die Prozesskammer 2 mit einem Agens beaufschlagbar ist.

Die Agenszuführeinrichtung 12 weist einen Vorratsbehälter 14 für das Agens auf (Figur 1). Dieser ist über einen Leitungsabschnitt mit der Prozesskammer 2 verbunden. Als Agens können bspw. Stickoxide (N₂O) und/oder Wasserstoff (H2) im Bereich zwischen 0,01 Gewichtsprozent (Gew.%) bis 20 Gew.%, besonders bevorzugt im Bereich zwischen 0,1 Gew.% bis 5 Gew.% und/oder Kohlenmonoxid (CO) im Bereich zwischen 0,001 Gew.% bis 5 Gew.%, besonders bevorzugt im Bereich zwischen 0,001 Gew.% bis 1 Gew.% und/oder Stickstoffmonoxid (NO) im Bereich zwischen 0,001 Gew.% bis 0,1 Gew.%, besonders bevorzugt im Bereich zwischen 0,001 Gew.% bis 0,05 Gew.% vorgesehen sein, oder das chemisch reduzierend wirkende Agens Mischungen aus vorstehenden Gasen umfasst.

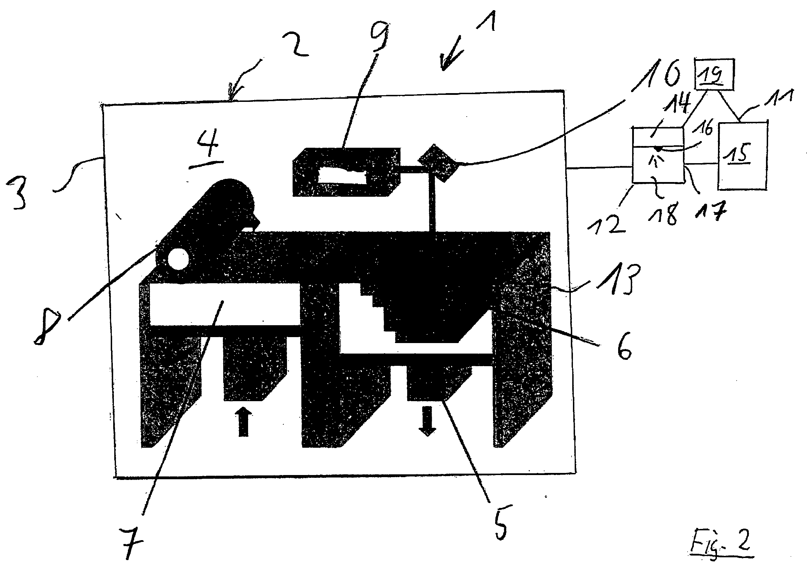

Alternativ kann die Agenszuführeinrichtung 12 eine Mischkammer 18 umfassen (Figur 2). Die Mischkammer 18 weist einen Einlass 17 zum Zuführen von Prozessgas aus dem Vorratsbehälter 15 für Prozessgas und einen Einlass 16 zum Zuführen von Agens aus dem Vorratsbehälter 14 für die Agenskomponente auf.

Das Prozessgas und das Agens können auch als Premix aus einem Premixgasvorratsbehälter 20 bereitgestellt werden, der sowohl Prozessgas als auch einen entsprechenden Anteil an Agens enthält (Figur 1). In Figur 1 ist der Premixgasvorratsbehälter 20 der sowohl Prozessgas als auch einen entsprechenden Anteil an Agens enthält durch die beiden Vorratsbehälter 14, 15 dargestellt. Dieser ist jedoch als ein einziger Behälter ausgebildet. Dieser den Premix enthaltende Premixgasvorratsbehälter 20bildet dann die Agenszuführeinrichtung 12 aus und ist mit der Prozesskammer 2 direkt zusätzlich zum dem Vorratsbehälter für das Prozessgas verbunden oder mit der Mischkammer verbunden.

Weiterhin ist eine Steuereinrichtung 19 zum Steuern der Zugabe des Agens vorgesehen. Die Steuereinrichtung umfasst eine Agensreglereinrichtung mit einem geschlossenen Regelkreis, die die Zugabe regelt. Die Agensreglereinrichtung kann einen P-Regler, einen I-Regler, einen D-Regler und Kombinationen daraus, wie z.B. einen PID-Regler umfassen. Die Agensreglereinrichtung erfasst mittels zumindest eines Sensors einen Ist-Wert einer Konzentration des Agens im Prozessgas und/oder in der Prozessgasatmosphäre oder einen entsprechenden Volumenstroms des Agens oder des das Agens enthaltenden Prozessgases und vergleicht diesen mit einem vorgegebenen Sollwert, wobei über ein Stellglied der vorgegebene Sollwert eingestellt wird.

Im Folgenden wird ein erfindungsgemäßes Verfahren anhand eines Ausführungsbeispiels beschrieben.

Dabei wird im ersten Schritt ein metallisches Ausgangsmaterial auf der Bauplattform 5 in Form eines Pulverbetts mittels der Beschichtungseinrichtung aufgebracht bzw. bereitgestellt. Alternativ kann das metallische Ausgangsmaterial auch mittels einer Pulverzuführung oder einer Drahtzuführung zugeführt werden.

Anschließend wird in einem zweiten Schritt der Prozesskammer 2 mittels der Prozessgaszuführeinrichtung 11 als Prozessgas ein inertes Schutzgas, wie z. B. Stickstoff, zugeführt.

In einem nächsten Schritt wird das Ausgangsmaterial mittels des Lasers 9 aufgeschmolzen.

Diese Schritte werden wiederholt.

Zu einem vorbestimmten Zeitpunkt oder auch während des gesamten Herstellungsprozesses und besonders bevorzugt vor dem Aufschmelzen des Ausgangsmaterials wird der Prozesskammer und/oder dem Prozessgas das Agens entweder als Mischung oder jeweils getrennt voneinander mittels der Agenszuführeinrichtung zugeführt, wie dies vorstehend an Hand der Vorrichtung beschrieben wurde. Ggfs. kann nach dem Aufbau jeder Schicht ein Stabilisierungsschritt vorgesehen sein, bei dem die entsprechende Schicht abgekühlt und verfestigt wird.

### Bezugszeichenliste:

- 1: Vorrichtung
- 2: Prozesskammer
- 3: Kammerwandung
- 4: Prozessraum
- 5: Bauplattform
- 6: Bauteil
- 7: Vorratsbehälter
- 8: Auftrageinrichtung
- 9: Laser
- 10: Umlenkeinrichtung
- 11: Prozessgaszuführeinrichtung
- 12: Agenszuführeinrichtung
- 13: Behälter
- 14: Vorratsbehälter für Agens
- 15: Prozessgasvorratsbehälter
- 16: Einlass Agens
- 17: Einlass Prozessgas
- 18: Mischkammer
- 19: Steuereinrichtung
- 20: Premixgasvorratsbehälter

## Patentansprüche

1. Verfahren zum generativen Fertigen eines dreidimensionalen Bauteils umfassend die folgenden Schritte
- Bereitstellen eines metallischen Ausgangsmaterials,
- Zuführen eines Prozessgases zum Ausgangsmaterial,
- Schmelzen des Ausgangsmaterials mit einer Wärmequelle,
**dadurch gekennzeichnet,**
**dass** das Prozessgas einen Anteil an einem chemisch reduzierend wirkenden Agens aufweist.

2. Verfahren nach Anspruch 1,
**dadurch gekennzeichnet,**
**dass** das Prozessgas ein inertes Gas, wie z.B. Stickstoff, Helium oder Argon ist.

3. Verfahren nach Anspruch 1 oder 2,
**dadurch gekennzeichnet,**
**dass** das chemisch reduzierend wirkende Agens ein Stickoxid (N₂O), und/oder Wasserstoff (H2) im Bereich zwischen 0,01 Gewichtsprozent (Gew.%) bis 20 Gew.%, besonders bevorzugt im Bereich zwischen 0,1 Gew.% bis 5 Gew.% und/oder Kohlenmonoxid (CO) im Bereich zwischen 0,001 Gew.% bis 5 Gew.%, besonders bevorzugt im Bereich zwischen 0,001 Gew.% bis 1 Gew.% und/oder Stickstoffmonoxid (NO) im Bereich zwischen 0,001 Gew.% bis 0,1 Gew.%, besonders bevorzugt im Bereich zwischen 0,001 Gew.% bis 0,05 Gew.% ist oder das chemisch reduzierend wirkende Agens der Mischungen aus vorstehenden Gasen umfasst.

4. Verfahren nach einem der Ansprüche 1 bis 3,
**dadurch gekennzeichnet,**
**dass** die Zudosierung des Agens von einer Steuereinrichtung gesteuert wird.

5. Verfahren nach einem der Ansprüche 1 bis 4,
**dadurch gekennzeichnet,**
**dass** das metallische Ausgangsmaterial mittels Pulverbett oder Pulverzuführung oder Drahtzuführung bereitgestellt wird und die Wärmequelle ein Laserstrahl, ein Elektronenstrahl oder ein Plasma-/Lichtbogen ist.

6. Vorrichtung zum generativen Fertigen von dreidimensionalen Bauteilen umfassend
- eine Prozesskammer,
- eine Bauplattform auf der ein metallisches Ausgangsmaterial bereitstellbar ist,
- eine Prozessgaszuführeinrichtung zum Zuführen eines Prozessgases,
- eine Wärmequelle zum Schmelzen des Ausgangsmaterials,
**dadurch gekennzeichnet,**
**dass** eine Agenszuführeinrichtung vorgesehen ist, um dem Prozessgas einen Anteil an einem chemisch reduzierend wirkenden Agens zuzuführen oder die Agenszuführeinrichtung ein Gasvorratsbehälter ist, der Prozessgas und ein chemisch reduzierend wirkendendes Agens enthält.

7. Vorrichtung nach Anspruch 6,
**dadurch gekennzeichnet,**
**dass** die Agenszuführeinrichtung eine Mischkammer umfasst, die zum Beimischen des Agens zum Prozessgas vorgesehen ist, wobei aus der Mischkammer der Prozesskammer Prozessgas oder eine Mischung aus Prozessgas und Agens oder reines Agens zuführbar ist.

8. Vorrichtung nach Anspruch 6 oder 7,
**dadurch gekennzeichnet,**
**dass** die Agenszuführeinrichtung ein Gasvorratsbehälter ist, der sowohl Prozessgas als auch einen entsprechenden Anteil an Agens enthält.

9. Vorrichtung nach einem der Ansprüche 6 bis 8,
**dadurch gekennzeichnet,**
**dass** die Agenszuführeinrichtung ein Gasvorratsbehälter ist, der Agens enthält, wobei die Prozessgaszuführeinrichtung einen Prozessgasvorratsbehälter umfasst der sowohl Prozessgas enthält.

10. Vorrichtung nach einem der Ansprüche 6 bis 9,
**dadurch gekennzeichnet,**
**dass** eine Steuereinrichtung umfassend eine Agensreglereinrichtung mit einem geschlossenen Regelkreis zum Regeln der Zugabe des Agens vorgesehen ist, wobei mittels eines Sensors ein Ist-Wert eines oder mehrerer Volumenströme oder eine Konzentration des Agens in der Prozesskammer und/oder der Mischkammer erfasst wird, mit einem vorgegebenen Sollwert verglichen und über ein Stellglied der vorgegebenen Sollwert eingestellt wird.
